# EUROPEAN PATENT APPLICATION

(11) **EP 4 733 996 A1**
(43) Date of publication of application: **29.04.2026**
(21) Application number: 23942332.0
(22) Date of filing: 21.06.2023
(51) Int. Cl.: G06N 3/0475, G06N 20/00

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: KAJIKI, Yoshihiro, Tokyo 108-8001 (JP); YOSHIKAWA, Masato, Tokyo 108-8001 (JP)
(74) Representative: Betten & Resch
(86) International application number: PCT/JP2023/022906
(87) International publication number: WO 2024/261895

(57) **Abstract**

An information processing apparatus includes: a first acquisition unit that acquires a moving image; a target identification unit that identifies a target from the moving image; a second acquisition unit that acquires a target state representing a state of the target; a verbalization unit that generates a sentence indicating the target state regarding the target, from the target and the target state; and a learning unit that enables a large language model to learn the sentence generated by the verbalization unit.

## Description

### Technical Field

The present disclosure relates to technical fields of an information processing apparatus, an information processing method, and a recording medium.

### Background Art

As this type of apparatus, for example, there is proposed an apparatus that analyzes a video captured by a monitoring camera and acquires verbalization data about user behavior (see Patent Literature 1).

### Citation List

### Patent Literature

[Patent Literature 1] JP2010-238204A

### Summary

### Technical Problem

It is an example object of the present disclosure to provide an information processing apparatus, an information processing method, and a recording medium that aim to improve the techniques/technologies disclosed in Citation List.

### Solution to Problem

An information processing apparatus according to an example aspect includes: a first acquisition unit that acquires a moving image; a target identification unit that identifies a target from the moving image; a second acquisition unit that acquires a target state representing a state of the target; a verbalization unit that generates a sentence indicating the target state regarding the target, from the target and the target state; and a learning unit that enables a large language model to learn the sentence generated by the verbalization unit.

An information processing method according to an example aspect includes: acquiring a moving image; identifying a target from the moving image; acquiring a target state representing a state of the target; generating a sentence indicating the target state regarding the target, from the target and the target state; and enabling a large language model to learn the sentence generated.

A recording medium according to an example aspect is a recording medium on which a computer program that allows a computer to execute an information processing method is recorded, the information processing method including: acquiring a moving image; identifying a target from the moving image; acquiring a target state representing a state of the target; generating a sentence indicating the target state regarding the target, from the target and the target state; and enabling a large language model to learn the sentence generated.

### Brief Description of Drawings

[FIG. 1] FIG. 1 is a block diagram illustrating an example of a configuration of an information processing apparatus.
[FIG. 2] FIG. 2 is a flowchart illustrating operation of the information processing apparatus according to the present disclosure.
[FIG. 3] FIG. 3 is a block diagram illustrating another example of the configuration of the information processing apparatus.
[FIG. 4] FIG. 4 is a block diagram illustrating another example of the configuration of the information processing apparatus.
[FIG. 5] FIG. 5 is a diagram illustrating person tracking processing.
[FIG. 6] FIG. 6 is a block diagram illustrating another example of the configuration of the information processing apparatus.

### Description of Example Embodiments

Examples of such an apparatus may be, for example, a temperature measurement apparatus that measures indoor temperature, a security apparatus that analyzes a video captured by a monitoring/surveillance camera and detects intrusion by a suspicious person, and the like.

These apparatuses employ information processing in which real-world events are observed by devices such as a temperature sensor and a camera, in which output values of the devices are applied to some mathematical model for analysis, and in which situations or events occurring in the real world are understood. Furthermore, there are also an air conditioning apparatus that controls the indoor temperature according to the temperature that is understood, a security apparatus that notifies a security company based on detection results, and the like.

For example, in the case of a temperature measurement apparatus using a thermistor as the temperature sensor, a constant voltage is applied to the thermistor in an electrical circuit to measure a current, and an output value corresponding to the current is inputted to the information processing. Here, the thermistor has the characteristic that its resistance value changes depending on temperature, and the resistance value is calculated from Ohm's law once the voltage and the current are known. Therefore, in the information processing, it is possible to obtain an output corresponding to the temperature in the real-world, by applying an input value corresponding to the current to a mathematical model. Hereafter, a variable inputted into a mathematical model will be referred to as an explanatory variable, and a variable outputted by the mathematical model will be referred to as a response variable.

In the case of a security apparatus that analyzes a video captured by a monitoring camera and detects intrusion by a suspicious person, the video outputted by an image sensor of the camera is the explanatory variable for a mathematical model, and a value indicating, as a true or false, whether or not there is any intrusion by a suspicious person is the response variable. Here, for example, in a case where one frame of the video is analyzed by a monitoring camera equipped with a 2-megapixel image sensor, the number of the explanatory variables is 2 million, and the number of the response variable is 1. Furthermore, in the case of a security apparatus that detects not only the intrusion by a suspicious person, but also fire occurrence, the number of the response variables is 2. As described above, the number of the explanatory variables and the response variables handled by a mathematical model will be referred to as the number of dimensions.

In a case where an information processing apparatus is used to observe and understand the real-world events, due to the nature of the information processing in which the explanatory variable(s) is applied to a mathematical model to obtain the response variable(s), it is necessary to design and implement, as the information processing, a mathematical model that derives the response variable(s) from the explanatory variable(s) in advance. Consequently, the situations and events that can be understood are limited, frequently failing to meet user expectations, which is problematic.

For example, in the case of a temperature measurement apparatus that measures the indoor temperature, the temperature in the real world at its installation location can be understood; however, in the case of an air conditioning system using this temperature, a user often seeks comfort based on not only the temperature, but also humidity. A mathematical model that does not implement humidity as the explanatory variable and does not implement comfort as the response variable, could fail to meet user expectations.

Furthermore, the comfort that a user seek from an air conditioning apparatus, varies depending on context from the past of the user's situations, such as "just returning home from outside in scorching heat" and "exercising inside." In a case where these factors are not implemented as the mathematical model, air conditioning cannot be controlled based on those factors.

As described above, the real world is an unlimited environment with infinite explanatory variables and infinite response variables representing user expectations. Therefore, a mathematical model designed for a limited environment in which the explanatory variables and the response variables are limited in advance, could fail to the user's diverse expectations.

For example, a possible information processing apparatus inputs, to the information processing, image information on a person using an ATM in the real world, verbalizes and outputs a "state of an action of the person" at a first image analysis stage, and compares the verbalized "state of an action of the person" with "predefined conditions" to detect "whether or not the person is likely to become a victim of a crime" at a latter stage. Even if, however, the image information with an enormous number of dimensions is used as the explanatory variable(s) at the first stage to respond to the diverse real world, and language combining nouns and verbs is used as the response variable(s) at the first stage to express diverse states of actions, the environment could be a limited environment in which conditions for the aforementioned comparison at the latter stage are restricted in advance. Consequently, it is hardly possible to understand diverse states of actions of people in the real world.

For example, a possible information processing apparatus inputs real-world image information to the information processing, recognizes a face or an object, and simultaneously performs processing of verbalizing a state of the face or object. When outputting the result, presenting a user with an image of the recognized face or object itself, accompanied by a sentence verbalizing the state, could enhance the user's understanding of the real world. This apparatus, however, uses the image of the recognized face or object and the sentence verbalizing the state, as the response variables, thereby providing an enormous number of dimensions and responding to the diverse real world. Yet, it is humans that understand it, not technology.

### < First Example Embodiment>

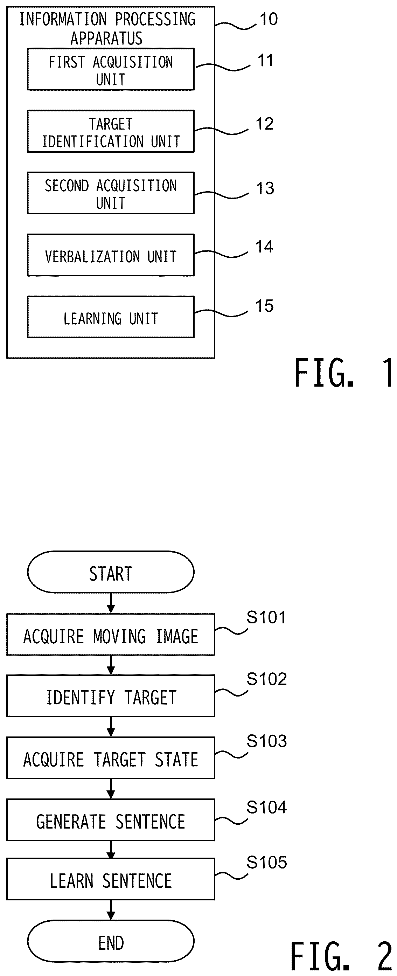

An information processing apparatus, an information processing method, and a recording medium according to a first example embodiment will be described with reference to FIG. 1 and FIG. 2. The following describes the information processing apparatus, the information processing method, and the recording medium according to the first example embodiment, by using an information processing apparatus 10.

In FIG. 1, the information processing apparatus 10 includes a first acquisition unit 11, a target identification unit 12, a second acquisition unit 13, a verbalization unit 14, and a learning unit 15.

The first acquisition unit 11 acquires a moving image. For example, the first acquisition unit 11 may acquire one or more moving images captured by one or more cameras. The cameras are not limited to fixed-position cameras like monitoring/surveillance cameras, but may also be portable terminal apparatuses (e.g., smartphones) with a camera function.

The target identification unit 12 identifies a target from the moving image. The "target" may include at least one of a person and an object. For example, the target identification unit 12 may identify the target from the moving image using an image recognition technology. Specifically, the target identification unit 12 may identify targets from the moving image using pattern recognition processing serving as an example of the image recognition technology. The target identification unit 12 may also identify the target from the moving image using a computational model serving as another example of the image recognition technology, which outputs a recognition result of the target when the moving image is inputted. An example of the computational model is a computational model using a neural network (e.g., CNN: Convolutional Neural Network). In a case where the target is a person, the target identification unit 12 may identify the person as the target, using biometric authentication (e.g., at least one of facial recognition and iris recognition) based on the moving image.

The moving image may include a reader that reads an identification tag (e.g., an employee ID card, an access permit, etc.) held by the person as the target, and surroundings of the reader. Based on a time when the person (i.e., the target) is detected from the moving image and a time when the reader reads identification information indicated by the identification tag, the target identification unit 12 may associate the detected person with the read identification information, thereby identifying the person as the target.

The second acquisition unit 13 acquires a target state representing a state of the target. The second acquisition unit 13 may associate the acquired target state with the corresponding target (i.e., the target identified by the target identification unit 12). For example, the second acquisition unit 13 may acquire, as the target state, at least one of the target's action and behavior from the moving image using a video analysis technology. For example, the second acquisition unit 13 may acquire an output value of a sensor attached to the target, as the target state. For example, in a case where the target is a person wearing a biosensor, the second acquisition unit 13 may acquire an output value of the biosensor (e.g., body temperature, pulse rate, etc.) as the target state. The second acquisition unit 13 may acquire the person's momentary state (e.g., "body temperature of 38 degrees," etc.) as the target state, or may acquire changes in the person's state over a predetermined period of time (e.g., "body temperature rises by 2 degrees in one hour," etc.) as the target state. Examples of the biosensor may be a blood pressure sensor, a pulse wave sensor, a temperature sensor, a motion sensor, an electrooculography sensor, and the like. For example, the target state may be acquired from a biosensor of a wearable device worn by the target.

The verbalization unit 14 generates a sentence indicating the target state regarding one target, from the one target and the target state associated with the one target. For example, the verbalization unit 14 may generate a sentence conforming to the grammar of a natural language, as the sentence indicating the target state. The "sentence conforming to the grammar of a natural language" may be a sentence in which a plurality of words corresponding to a subject and a predicate are arranged according to a predetermined grammar, thereby describing at least one of a state and a situation of the subject indicating the target. The sentence conforming to the grammar of a natural language may contain not only the subject and the predicate, but also at least one of an object, a complement, a modifier, a particle, and a conjunction, for example.

Note that regarding an expression form of the sentence conforming to the grammar of a natural language, it may not be expressed in a natural language actually used by humans, such as Japanese and English. For example, in a case where the sentence generated by the verbalization unit 14 is not presented to a user (i.e., a human) of the information processing apparatus 10, the verbalization unit 14 may replace at least a part of the words contained in the natural language with symbols to express the sentence. In a case where there is a correspondence between at least one of real-world object, state, and situation and at least one of words and symbols representing the at least one, the verbalization unit 14 may not predefine at least one of ontology and words to replace (i.e., may arbitrarily add new words). The aforementioned correspondence may not be strict; as in the natural language, there may be at least one of synonyms and variations in notation.

For example, in a case where the target identified by the target identification unit 12 is "Mr. Suzuki" and the target state acquired by the second acquisition unit 13 is "collapsed," the verbalization unit 14 may generate a sentence "Mr. Suzuki collapsed." For example, in a case where the targets identified by subject identification unit 12 are "Mr. Suzuki" and "elderly person," and the target states acquired by second acquisition unit 13 are "collapsed," "bathroom," and "at 6:30 PM," the verbalization unit 14 may generate a sentence "At 6:30 PM, an elderly person named Mr. Suzuki collapsed in the bathroom."

The learning unit 15 enables a large language model to learn the sentence generated by the verbalization unit 14. The term "learn" may refer to processing of interpreting the content of a sentence, for example, based on the meaning of each word contained in the sentence, relations between words, or the like.

The large language model may be a leaning model generated by inputting a large number of sentences (e.g., a huge amount of sentences/text on the web, past records similar to an analysis target, etc.) into a model having a model structure that allows handling of many variables and parameters, such as, for example, Transformer, and by performing machine-learning of the aforementioned model using unsupervised learning such as, for example, Self-Attention.

The operation of the information processing apparatus 10 will be described with reference to a flowchart in FIG. 2. In FIG. 2, the first acquisition unit 11 of the information processing apparatus 10 acquires the moving image (step S101). Then, the target identification unit 12 of the information processing apparatus 10 identifies the target from the moving image (step S102). Then, the second acquisition unit 13 of the information processing apparatus 10 acquires the target state representing the state of the target (step S103). Then, the verbalization unit 14 of the information processing unit 10 generates the sentence indicating the target state regarding the target, from the target and the target state (step S104). Then, the learning unit 15 enables the large language model to learn the sentence generated in the step S104 (step S105).

As described above, the information processing apparatus 10 performs an information processing method including: acquiring a moving image; identifying a target from the moving image; acquiring a target state representing a state of the target; generating a sentence indicating the target state regarding the target, from the target and the target state; and enabling a large language model to learn the sentence generated.

The information processing apparatus 10 described above may be realized by a computer reading a computer program recorded on a recording medium. In this case, it can be said that a computer program that allows a computer to execute an information processing method is recorded on a recording medium, the information processing method including: acquiring a moving image; identifying a target from the moving image; acquiring a target state representing a state of the target; generating a sentence indicating the target state regarding the target, from the target and the target state; and enabling a large language model to learn the sentence generated.

### (Technical Effect)

For example, an apparatus having only a target recognition function, such as an IC (Integrated Circuit) card reader and a facial recognition device, is configured to observe an entity corresponding to the subject of a sentence; however, a word corresponding to the predicate of the sentence is limited to a specific word that is dependent on the installation location of the aforementioned apparatus, such as "enter". Therefore, the apparatus having only the target recognition function alone may not be allowed to respond, for example, to an event expressed by a combination of the subject and the verb.

For example, an apparatus having only a state acquisition function, such as a human presence sensor and an intrusion detector, is configured to observe an action corresponding to the predicate of a sentence, but not to identify an entity corresponding to the subject of the sentence. Consequently, the apparatus having only the state acquisition function may not be allowed to respond, for example, to an event expressed by a combination of the subject and the verb, since the entity is many and unspecified.

Even if the apparatus having only the target recognition function is combined with the apparatus having only the state acquisition function, unordered data description languages such as XML, JSON, and YAML, which have no grammar, particles, and conjunctions, may not be allowed to describe relations between words.

In contrast, the verbalization unit 14 of the information processing apparatus 10 verbalizes using both the target identified by the target identification unit 12 (corresponding to the aforementioned target recognition function) and the target state acquired by the second acquisition unit 13 (corresponding to the aforementioned state acquisition function). Therefore, the verbalization unit 14 is allowed to generate the sentence conforming to the grammar of a natural language (e.g., an SV-type sentence containing at least a subject and a verb).

Furthermore, for example, at least one of particles, conjunctions, and grammatical constructions/syntax may bepreset in the verbalization unit 14. For instance, the verbalization unit 14 may generate a sentence by inserting words representing the target identified by the target identification unit 12 and words representing the target state acquired by the second acquisition unit 13, into a preset grammatical construction.

Furthermore, attribute information indicating an attribute of at least one of a person and an object serving as the target, may be registered in advance in the target identification unit 12. The target identification unit 12 may assign, to the identified target, attribute information indicating the attribute of the identified target. For example, the verbalization unit 14 may include, in a sentence, at least one of a complement and a modifier that provides supplementary explanation of the target, based on the attribute information assigned to the target.

In addition, for example, position information indicating at least one of the installation location of the information processing apparatus 10 and a moving image capture location, may be registered in advance in the second acquisition unit 13. The second acquisition unit 13 may assign the position information to the acquired target state. For example, the verbalization unit 14 may include, in a sentence, at least one of a complement, a modifier, and an adverb that provides supplementary explanation of a verb representing the target state, based on the location information assigned to the target state.

Furthermore, the verbalization unit 14 may include in a sentence, for example, at least one of wording indicating a date and time, and wording indicating a time attribute such as during working hours /outside working hours, based on time information.

The large language model allows the handling of many variables and parameters. Therefore, by the learning unit 15 enabling the large language model to learn the sentence generated by the verbalization unit 14, the large language model is allowed to analyze the meaning and context of the sentence. As a result, the large language model is allowed to analyze the real world in which there are an infinite number of causes and effects that are intricately intertwined, with a considerable degree of accuracy.

For example, in a case where the large language model is used for at least one of result prediction and cause estimation/inference, the large language model is allowed to understand the meaning of the sentence generated by the verbalization unit 14, and the meaning of each sentence including the context of a plurality of sentences arranged in a time series. This enables the large language model to perform prediction, such as estimation of a possibility of a particular outcome occurring in the current real world, or a cause having led to a particular outcome. For example, in a case where the user of the information processing apparatus 10 inputs a question into the large language model, the large language model is allowed to output an appropriate answer to the inputted question.

For example, it is assumed that the learning unit 15 enables the large language model to learn "Mr. Suzuki is an 85-year-old man" and "Mr. Suzuki suffers from a severe heart disease," as the sentence generated by the verbalization unit 14. In a case where the user subsequently inputs a prompt/an instruction/a directive "What are the risks if Mr. Suzuki takes a bathe early in the morning?" into the large language model, the large language model is capable of outputting an answer indicating the risks for "Mr. Suzuki" who is a specific person, from a state of "Mr. Suzuki" indicated by such sentences as "Mr. Suzuki is an 85-year-old man," "Mr. Suzuki suffers from a severe heart disease," and "Mr. Suzuki takes a bathe early in the morning," along with general knowledge or the like. For example, the large language model is capable of outputting such an answer as "Given that Mr. Suzuki is an elderly man in his 80s, the following risks are considered: 1. Fall, 2. Myocardial infarction, 3. Cerebral infarction, 4. Disorder of Consciousness."

### <Second Example Embodiment>

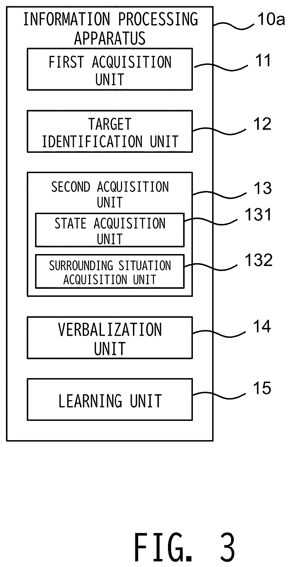

An information processing apparatus, an information processing method, and a recording medium according to a second example embodiment will be described with reference to FIG. 3. The following describes the information processing apparatus, the information processing method, and the recording medium according to the second example embodiment, by using an information processing apparatus 10a. In the second example embodiment, a part of a configuration of the information processing apparatus 10a differs from that of the information processing apparatus 10 described in the first example embodiment. The remaining parts may be the same as those described in the first example embodiment. Therefore, in the second example embodiment, a description that overlaps with that of the first example embodiment is omitted as appropriate.

In FIG. 3, the information processing apparatus 10a includes the first acquisition unit 11, the target identification unit 12, the second acquisition unit 13, the verbalization unit 14, and the learning unit 15. The second acquisition unit 13 includes a state acquisition unit 131 and a surrounding situation acquisition unit 132.

The state acquisition unit 131 acquires the target state representing the state of the target, from the moving image, as in the second acquisition unit 13 in the first example embodiment described above. The state acquisition unit 131 may associate the acquired target state with the corresponding target (i.e., the target identified by the target identification unit 12). For example, the state acquisition unit 131 may acquire, as the target state, at least one of the target's action and behavior from the moving image using the video analysis technology. For example, the state acquisition unit 131 may acquire the output value of a sensor attached to the target, as the target state.

The surrounding situation acquisition unit 132 acquires a surrounding situation of the target from the moving image. The "surrounding situation" may mean, for example, at least one of a person and an object located around the target when the target is identified by the target identification unit 12, and a state of the at least one of a person and an object located around the target. The surrounding situation acquisition unit 132 may associate the acquired surrounding situation with the corresponding target (i.e., the target identified by the target identification unit 12).

The verbalization unit 14 may generate a sentence indicating the target state regarding one target, from the one target, the target state associated with the one target, and the surrounding situation associated with the one target. The verbalization unit 14 may generate the sentence indicating the target state regarding one target, from the one target and either the target state or the surrounding situation associated with the one target. That is, the verbalization unit 14 may generate the sentence indicating the target state regarding one target, from the one target and at least one of the target state and the surrounding situation associated with the one target.

### (Technical Effect)

For example, the surrounding situation acquired by the surrounding situation acquisition unit 132 may be at least one of one target's action and behavior for at least one of a person and an object, such as "talking with another person" and "lifting an object." The verbalization unit 14 may generate a word corresponding to an object, from the acquired surrounding situation. As a result, the verbalization unit 14 is allowed to generate an SVO-type sentence containing at least a subject, a verb, and an object.

For example, the surrounding situation acquired by the surrounding situation acquisition unit 132 may be an environment around one target that could influence the state of the one target, such as "air temperature," "lighting intensity," and "lighting is on/off." The verbalization unit 14 may generate a word corresponding to at least one of a complement and a modifier (in other words, elements that provide supplementary explanation of the meaning of the sentence) from the acquired surrounding situation. As a result, the verbalization unit 14 is allowed to generate an SVC-type or SV-type sentence containing at least a subject, a verb, and either a complement and a modifier.

For example, in a case where the target identified by the target identification unit 12 is "Mr. Sato," the target states acquired by the state acquisition unit 131 are "bought" and "at 14:00," and the surrounding situations acquired by the surrounding situation acquisition unit 132 are "red" and "laptop personal computer," the verbalization unit 14 may generate a sentence "Mr. Sato bought a red laptop personal computer at 14:00."

### <Third Example Embodiment>

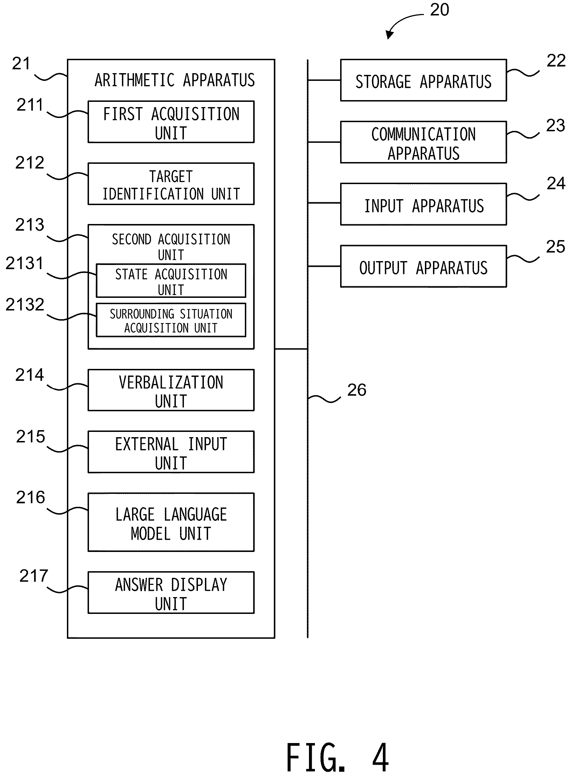

An information processing apparatus, an information processing method, and a recording medium according to a third example embodiment will be described with reference to FIG. 4. The following describes the information processing apparatus, the information processing method, and the recording medium according to the third example embodiment, by using an information processing apparatus 20. In the third example embodiment, a part of a configuration of the information processing apparatus 20 differs from that of the information processing apparatus 10a described in the second example embodiment. The remaining parts may be the same as those described in the first and second example embodiments. Therefore, in the third example embodiment, a description that overlaps with that of the first and second example embodiments is omitted as appropriate.

### (Configuration of Information Processing Apparatus)

In FIG. 4, the information processing apparatus 20 includes an arithmetic apparatus 21, a storage apparatus 22, and a communication apparatus 23. The information processing apparatus 20 may further include an input apparatus 24 and an output apparatus 25. The arithmetic apparatus 21, the storage apparatus 22, the communication apparatus 23, the input apparatus 24, and the output apparatus 25 may be connected via a data bus 26 in the information processing apparatus 20. The information processing apparatus 20 may not include at least one of the input apparatus 24 and the output apparatus 25.

The arithmetic apparatus 21 may include, for example, at least one of a CPU (Central Processing Unit), a GPU (Graphics Processing Unit), an FPGA (Field Programmable Gate Array), a TPU (Tensor Processing Unit), and a quantum processor.

The storage apparatus 22 may include, for example, at least one of a RAM (Random Access Memory), a ROM (Read-Only Memory), a hard disk apparatus, a magneto-optical disk apparatus, an SSD (Solid State Drive), and an optical disk array. That is, the storage apparatus 22 may include a non-transitory recording medium. The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 is executing the computer program.

The communication apparatus 23 may be configured to communicate with an apparatus external to the information processing apparatus 20. The communication apparatus 23 may perform wired communication or wireless communication.

The input apparatus 24 is an apparatus that is configured to receive an input of information to the information processing apparatus 20 from an external source. The input apparatus 24 may include an operating apparatus (e.g., a keyboard, a mouse, a touch panel, etc.) that is operable by an operator of the information processing apparatus 20. The input apparatus 24 may include a recording medium reading apparatus that is configured to read information recorded on a recording medium that is attachable to or detachable from the information processing apparatus 20, such as, for example, a USB (Universal Serial Bus) memory. In a case where information is inputted to the information processing apparatus 20 via the communication apparatus 23 (in other words, in a case where the information processing apparatus 20 acquires information via the communication apparatus 23), the communication apparatus 23 may function as an input apparatus.

The output apparatus 25 is an apparatus that is configured to output information to the outside of the information processing apparatus 20. The output apparatus 25 may output visual information such as characters/text and images, may output auditory information such as voice, or may output tactile information such as vibration, as the aforementioned information. The output apparatus 25 may include, for example, at least one of a display, a speaker, a printer, and a vibration motor. The output apparatus 25 may be configured to output information to a recording medium that is attachable to or detachable from the information processing apparatus 20, such as, for example, a USB memory. In a case where the information processing apparatus 20 outputs information via the communication apparatus 23, the communication apparatus 23 may function as an output apparatus.

The arithmetic apparatus 21 may include a first acquisition unit 211, a target identification unit 212, a second acquisition unit 213, a verbalization unit 214, an external input unit 215, a large language model unit 216, and an answer display unit 217, as function blocks realized logically or as processing circuits realized physically. The second acquisition unit 213 may include a state acquisition unit 2131 and a surrounding situation acquisition unit 2132.

Furthermore, at least one of the first acquisition unit 211, the target identification unit 212, the second acquisition unit 213, the verbalization unit 214, the external input unit 215, the large language model unit 216, and the answer display unit 217 may be realized in a form in which logical function blocks and physical processing circuits (i.e., hardware) are mixed. In a case where at least a part of the first acquisition unit 211, the target identification unit 212, the second acquisition unit 213, the verbalization unit 214, the external input unit 215, the large language model unit 216, and the answer display unit 217 is a function block, the at least a part of the first acquisition unit 211, the target identification unit 212, the second acquisition unit 213, the verbalization unit 214, the external input unit 215, the large language model unit 216, and the answer display unit 217 may be realized by the arithmetic apparatus 21 executing a predetermined computer program.

The arithmetic apparatus 21 may acquire (in other words, read) the predetermined computer program from the storage apparatus 22. The arithmetic apparatus 21 may also read the predetermined computer program stored on a computer-readable, non-transitory recording medium, by using a not-illustrated recording medium reading apparatus provided in the information processing apparatus 20. The arithmetic apparatus 21 may acquire (in other words, may download or read) the predetermined computer program from a not-illustrated apparatus external to the information processing apparatus 20 via the communication apparatus 23. As the recording medium that records thereon the predetermined computer program to be executed by the arithmetic apparatus 21, at least one of an optical disk, a magnetic medium, a magneto-optical disk, a semiconductor memory, and any other medium configured to store a program may be used.

The "first acquisition unit 211", the "target identification unit 212," the "second acquisition unit 213," the "verbalization unit 214," and the "large language model unit 216" are components corresponding to the "first acquisition unit 11," the "target identification unit 12," the "second acquisition unit 13," the "verbalization unit 14," and the "learning unit 15," in the first example embodiment described above, respectively. The "state acquisition unit 2131" and the "surrounding situation acquisition unit 2132" are components corresponding to the "state acquisition unit 131" and the "surrounding situation acquisition unit 132" in the second example embodiment described above, respectively.

### (Operation of Information Processing Apparatus)

The external input unit 215 acquires at least one of information inputted by a user (or an operator) via the input apparatus 24, and information from an apparatus external to the information processing apparatus 20. The information acquired by the external input unit 215 will be hereinafter referred to as "external input information" as appropriate. The external input information may include text data described using words and grammar common to a natural language used in a sentence generated by the verbalization unit 214. That is, the external input information may include a sentence.

Furthermore, words representing one event may not be identical in the sentence generated by the verbalization unit 214 and in the sentence included in the external input information. That is, as in a natural language, there may be at least one of variations in notation and synonyms. Furthermore, the sentence included in the external input information may contain grammatical irregularities.

The large language model unit 216 uses a large language model to learn the sentence generated by the verbalization unit 214 (i.e., the sentence indicating the target state regarding the target) and the external input information acquired by the external input unit 215. In other words, the large language model unit 216 enables the large language model to learn the sentence generated by the verbalization unit 214 and the external input information acquired by the external input unit 215.

In a case where the user inputs a prompt via the input apparatus 24, the large language model unit 216 uses the large language model to output an answer to the inputted prompt. The large language model unit 216 may output the answer to the inputted prompt, based on a result of learning at least one of the sentence generated by the verbalization unit 214 and the external input information acquired by the external input unit 215.

The answer display unit 217 controls the output apparatus 25 to display the answer output from the large language model unit 216. As a result, the answer may be displayed, for example, on a display serving as one example of the output apparatus 25.

### (Example of Application of Information Processing Apparatus)

For example, the operation of the information processing apparatus 20 when applied to construction site process management will be specifically described.

It is assumed that the external input unit 215 has acquired, for example, construction technical information, a process plan, and the like, as the external input information. The construction technical information may be acquired from at least one of construction-related academic journals and industry papers. The construction technical information may also be acquired via the Internet. The process plan may be inputted by an on-site supervisor via the input apparatus 24, or may be acquired from a terminal apparatus held by the on-site supervisor via the communication apparatus 23. The process plan may be updated as appropriate. The external input unit 215 may acquire the updated process plan as the external input information. The external input information may include at least one of a worker's work report and an inspection report indicating inspection results by a qualified person. The external input information may also include a proper name specific to a construction site.

It is assumed that a plurality of cameras are installed to capture images of a plurality of locations in the construction site. At least one of the plurality of cameras may be installed to capture images of an area near an entrance/exit of the construction site. The first acquisition unit 211 acquires moving images respectively captured by the plurality of cameras.

The target identification unit 212 may perform facial recognition using the moving images acquired by the first acquisition unit 211, in a cased of identifying a person as the target. At the construction site, the behavior of workers is a key analysis target, and thus, the target identification unit 212 may identify only persons as targets. In this case, the target identification unit 212 may be referred to as a "person identification unit".

Furthermore, the target identification unit 212 may identify the name of the person as the target (in other words, an authentication subject) via the facial recognition. The target identification unit 212 may also identify, in addition to the name, at least one of affiliated company name, job category, and qualifications of the person as the target, via the facial recognition. The target identification unit 212 may perform image recognition processing on a moving image including the appearance of the person as the target, thereby identifying at least one of the affiliated company name, job category, and qualifications of the person. With this configuration, it is possible to specifically identify the person as the target, while also acquiring information about the person.

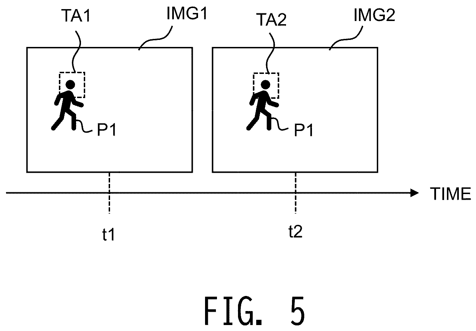

The target identification unit 212 may perform tracking processing of tracking the person as the target, based on the moving images acquired by the first acquisition unit 211. The tracking processing will be described with reference to FIG. 5.

Images IMG1 and IMG2 illustrated in FIG. 5 are images including a person P1 as the target (in other words, images in which the person P1 is captured). The image IMG1 may be an image captured by a camera at a time t1. The image IMG2 may be an image captured by the camera at a time t2, which is later than the time t1.

Each of the images IMG1 and IMG2 may correspond to a single frame of a video. The image IMG2 may not correspond to a frame immediately after a frame corresponding to the image IMG1. That is, the image IMG2 may correspond to a frame that is two or more frames later than the frame corresponding to the image IMG1.

The target identification unit 212 may detect, from the image IMG1, a head of the person P1 included in the image IMG1. Since existing techniques/technologies are applicable to a method of detecting a human head from an image, a detailed description of the method is omitted. Based on the detected head of the person P1, the target identification unit 212 may set an area including the head of the person P1, as a target tracking area TA1. The target identification unit 212 may also detect an upper body or an entire body of the person P1 included in the image IMG1. Based on the detected upper body or entire body of the person P1, the target identification unit 212 may set an area including the upper body or entire body of the person P1, as the target tracking area TA1.

In a case where the target tracking area TA1 is set, the target identification unit 212 sets or assigns a tracking ID, which is identification information for identifying the person P1 associated with the target tracking area TA1, to the person P1. The target identification unit 212 calculates a position of the person P1 (e.g., a position at the feet of the person P1) based on the target tracking area TA1. Since existing techniques/technologies are applicable to a method of calculating, from an image, the position of a subject included in the image, a detailed description of the method is omitted. The target identification unit 212 may associate the tracking ID with the position of the person P1 and may register them in the storage apparatus 22.

The target identification unit 212 may use the image IMG2 and the image IMG1, thereby identifying the person P1 included in the image IMG2. Identifying the person P1 included in the image IMG2 is synonymous with establishing correspondence/mapping between the person P1 included in the image IMG1 and the person P1 included in the IMG2. Therefore, at least one of a matching method and an optical flow method associated with the correspondence/mapping between images, is applicable to the identification of the person P1 included in the IMG2. Since existing various aspects are applicable to each of the matching method and the optical flow method, a detailed description of each method is omitted.

In a case where the person P1 in the image IMG2 is identified, the target identification unit 212 may detect the head of the person P1. Based on the detected head of the person P1, the target identification unit 212 may set an area including the head of the person P1, as a target tracking area TA2. Since the person P1 included in the image IMG1 and the person P1 included in the image IMG2 are the same person, the tracking ID of the person P1 associated with the target tracking area TA2 is the same as the tracking ID of the person P1 associated with the target tracking area TA1. The target identification unit 212 calculates the position of the person P1 based on the target tracking area TA2. The target identification unit 212 may also detect an upper body or an entire body of the person P1 included in the image IMG2. Based on the detected upper body or entire body of person P1, the target identification unit 212 may set an area including the upper body or entire body of the person P1, as the target tracking area TA2.

The target identification unit 212 may store the position of the person P1 in the storage apparatus 22, in association with the tracking ID of the person P1. In a case where the position of the person P1 calculated based on the target tracking area TA1 is stored in the storage apparatus 22, the position of the person P1 is updated by the target identification unit 212 storing the position of the person P1 calculated based on the target tracking area TA2, in storage apparatus 22.

By the way, in some cases, it may be difficult for the target identification unit 212 to continue tracking the person P1 due to the head of the person P1 being hidden by another person, for example. In a case where the tracking of the person P1 is interrupted, the target identification unit 212 may perform the following processing. After the tracking of the person P1 is interrupted, the target identification unit 212 may determine whether or not a new person is detected from the moving images acquired by the first acquisition unit 211. The "new person" means a person for whom the tracking ID is not set.

In a case where a new person is detected, the target identification unit 212 may determine whether or not the person P1 and the new person are the same person by comparing feature quantities in the tracking area related to the person P1 (e.g., at least one of the tracking areas TA1 and TA2) with feature quantities in the tracking area related to the new person. In a case where it is determined that the person P1 and the new person are the same person, the target identification unit 212 may set or assign the tracking ID of the person P1, to the new person. As a result, the target identification unit 212 is allowed to track the person P1 again.

The feature quantities may be feature quantities related to the head of a person, feature quantities related to an upper body of the person, or feature quantities related to an entire body of the person. That is, the tracking area (e.g., at least one of the tracking areas TA1 and TA2) may include the head of the person, the upper body of the person, or the entire body of the person. The feature quantity may be obtained, for example, by using a Person Re-Identification technology.

The state acquisition unit 2131 acquires the target state representing the state of the target, from the moving image. The state acquisition unit 2131 may acquire, as the target state, such a state as one person as the target picking up an object, swinging an object, and releasing an object, for example. The state acquisition unit 2131 may assign, to the acquired target state, at least one of a time and location in which the target state is detected, and a proper name of a construction site.

The surrounding situation acquisition unit 2132 acquires the surrounding situation from the moving image. The surrounding situation acquisition unit 2132 may acquire, as the surrounding situation, for example, at least one of materials, tools, and heavy machinery that one person as the target is acting/working on. The surrounding situation acquisition unit 2132 may acquire, as the surrounding situation, the state of objects around one person as the target (e.g., framework, concrete walls, etc.).

For example, the target identification unit 212 may transmit target information indicating one person as the target, to the state acquisition unit 2131. The state acquisition unit 2131 may attach state information indicating the state of the one person as the target, to the target information. That is, the state acquisition unit 2131 may associate one person as the target with the target state indicating the state of the one person, by assigning the target state to the target information. The state acquisition unit 2131 may transmit the target information to which the target state is assigned, to the surrounding situation acquisition unit 2132. The surrounding situation acquisition unit 2132 may assign the surrounding situation to the target information to which the target state is assigned. That is, the surrounding situation acquisition unit 2132 may associate one person as the target, the target state indicating the state of the one person, and the surrounding situation, by assigning the surrounding situation to the target information to which the target state is assigned.

The verbalization unit 214 may generate a sentence indicating the target state regarding one person, from the one person as the target, the target state, and the surrounding situation.

For example, in a case where the target identified by the target identification unit 212 is "worker P," and the target states acquired by the state acquisition unit 2131 are "date/time: May 4, 2023, at 9:00," "location: near the center of a construction site A," and "action: operating heavy machinery," and the surrounding situations acquired by the surrounding situation acquisition unit 2132 are "a surrounding area with soil and rocks" and "heavy machinery is a large yumbo/excavator," the verbalization unit 214 may generate a sentence "On May 4, 2023, at 9:00, worker P is operating a large excavator near the center of the construction site A, in a surrounding area with soil and rocks."

For example, in a case where the target identified by the target identification unit 212 is "worker Q," and the target states acquired by the state acquisition unit 2131 are "date/time: May 4, 2023, at 9:00," "location: a central west side of the construction site A," and "action: driving a vehicle," and the surrounding situations acquired by the surrounding situation acquisition unit 2132 are "near a large excavator," "the vehicle is a dump truck," and "soil and rocks loaded on a cargo bed," the verbalization unit 214 may generate a sentence "On May 4, 2023, at 9:00, worker Q is loading soil and rocks onto a dump truck near a large excavator on a central west side of the construction site A."

For example, in a case where the target identified by the target identification unit 212 is "worker Q," and the target states acquired by the state acquisition unit 2131 are "date/time: May 4, 2023, at 10:00," "location: front gate of the construction site A," and "action: left by vehicle," and the surrounding situations acquired by the surrounding situation acquisition unit 2132 are "the vehicle is a dump truck" and "soil and rocks loaded on a cargo bed," the verbalization unit 214 may generate a sentence "On May 4, 2023, at 10:00, worker Q left from a front gate of the construction site A in a dump truck loaded with soil and rocks."

The large language model unit 216 uses the large language model to learn the sentence generated by the verbalization unit 214 and the external input information acquired by the external input unit 215.

Known methods for learning of the large language model include, for example, pretraining, fine-tuning, in-context learning and the like, but at least one of such methods may be used.

The large language model unit 216 may learn the sentence generated by the verbalization unit 214 and the external input information acquired by the external input unit 215, sequentially, or all at once by storing them in the storage apparatus 22 or the like.

For example, in a case where the learning of the large language model is performed using In-context Learning, the large language model unit 216 may store the sentence and the external input information in the storage apparatus 22 or the like, may add them as context information about the relevant site when processing a prompt, and may process the prompt while performing the learning.

For example, the large language model unit 216 may learn such sentences as "On May 4, 2023, at 9:00, worker P is operating a large excavator near the center of the construction site A, in a surrounding area with soil and rocks," "On May 4, 2023, at 9:00, worker Q is loading soil and rocks onto a dump truck near a large excavator on a central west side of the construction site A," and "On May 4, 2023, at 10:00, worker Q left from a front gate of the construction site A in a dump truck loaded with soil and rocks", and such a process plan as "process 2: foundation work; period: May 1 to May 31, 2023; tasks: site preparation, pile driving, rebar placement, formwork, concrete pouring, piping," serving as the external input information.

The large language model unit 216 may, as the learning, estimate that each sentence generated by the verbalization unit 214 represents "civil engineering work." The large language model unit 216 may, as the learning, estimate that each sentence generated by the verbalization unit 214 represents "ground leveling work in a foundation work process" of the "civil engineering work," based on the process plan serving as the external input information. The large language model 216 may, as the learning, compare the information "period: May 1 to May 31, 2023" included in the process plan serving as the external input information, with the date and time included in each sentence generated by the verbalization unit 214, thereby estimating that the construction is proceeding smoothly.

For example, in a case where an on-site supervisor inputs a prompt that is a question "Is the construction at the construction site A proceeding smoothly?" via the input apparatus 24, the large language model unit 216 may use the large language model to output an answer "It is proceeding smoothly." The answer display unit 217 may control the output apparatus 25 to display a character string "It is proceeding smoothly" that is the answer outputted from the large language model unit 216.

The on-site supervisor may input, via the input apparatus 24, a prompt that is a question "Is the construction at the construction site A proceeding smoothly? Please answer using the examples below as a guide: (a) It is proceeding smoothly; (b) A certain task in a certain process is behind schedule; and (c) A task in a certain process differs from the process plan." That is, the user of the information processing apparatus 20 may input information that restricts the format of the answer to the question, in addition to the prompt.

### (Technical Effect)

Traditional mathematical models are only allowed to handle a relatively small number of predefined explanatory variables. Consequently, the traditional mathematical models are not allowed to learn information described in a natural language (e.g., the sentence generated by the verbalization unit 214). In contrast, the large language model is allowed to handle a very large number of variables and parameters, enabling the learning of the information described in a natural language. Therefore, the large language model is allowed to learn, for example, the external input information.

A natural language offers more freedom than, for example, a programming language. Consequently, the use of a natural language allows for appropriate description of real-world events that change over time or give rise to new concepts. Therefore, the large language model unit 216, which learns a sentence conforming to the grammar of a natural language (e.g., the sentence generated by the language unit 214), is allowed to appropriately learn the real-world events.

As mentioned above, since the large language model enables unsupervised learning, there is no need to assign a teacher label to the information described in a natural language. That is, the large language model is allowed to learn the information described in a natural language as it is. Therefore, according to the information processing apparatus 20, user convenience may be enhanced.

In the real world, there are an infinite number of possible causes that could have triggered an event included in the moving images (in other words, an observed event) and possible effects/outcomes that could result from such an event. If the large language model unit 216 learns only the sentence generated by the verbalization unit 214, there is a risk that the large language model unit 216 may not be capable of appropriately answering to the user's prompt inputted via the input apparatus 24. Therefore, in the present example embodiment, the large language model unit 216 also learns the external input information acquired by the external input unit 215.

In a case where the large language model unit 216 learns both the sentence generated by the verbalization unit 214 and the external input information acquired by the external input unit 215, compared with a case where the large language model unit 216 learns only the sentence generated by the verbalization unit 214, the large language model unit 216 is allowed to narrow down at least one of the possible causes that could have triggered an event represented by the sentence generated by the verbalization unit 214, and the possible effects/outcomes that could result from such an event. Consequently, according to the information processing apparatus 20, it is possible to appropriately answer the user's prompt inputted via the input apparatus 24.

A specific example of the technical effect provided by the information processing apparatus 20 will be described below. Of the construction site process plan described above, including "process 2: foundation work; period: May 1 to May 31, 2023; tasks: site preparation, pile driving, rebar placement, formwork, concrete pouring, piping," a specific method of the pile driving is assumed to be changed from an original plan to a "down-the-hole hammer method." It is also assumed that the surrounding situation acquisition unit 2132 may not identify the heavy machinery used for the down-the-hole hammer method.

Based on the above assumptions, the external input unit 215 may acquire, as the external input information, a part of such a revised process plan as "process 2: foundation work; task name: pile driving; method name: down-the-hole hammer method; heavy machinery used: 0.25-ton excavator, down-the-hole hammer, oiler, swivel, 100-horsepower compressor, hose."

The large language model unit 216 may use the large language model to learn a part of such a revised process plan as "process 2: foundation work; task name: pile driving; method name: down-the-hole hammer method; heavy machinery used: 0.25-ton excavator, down-the-hole hammer, oiler, swivel, 100-horsepower compressor, hose."

For example, in a case where the target identified by the target identification unit 212 is "worker R," and the target states acquired by the state acquisition unit 2131 are "date/time: May 10, 2023, at 10:00," "location: front gate of the construction site A," and "action: entered by vehicle," and the surrounding situations acquired by the surrounding situation acquisition unit 2132 are "the vehicle is a trailer" and "unknown heavy machinery loaded on a cargo bed," the verbalization unit 214 may generate a sentence "On May 10, 2023, at 10:00, worker R entered through the front gate of the construction site A, with unknown heavy machinery loaded on a trailer."

For example, in a case where the target identified by the target identification unit 212 is "worker P," and the target states acquired by the state acquisition unit 2131 are "date/time: May 10, 2023, at 11:00," "location: near the center of the construction site A," and "action: operating heavy machinery," and the surrounding situations acquired by the surrounding situation acquisition unit 2132 are "a surrounding area with soil and rocks," "heavy machinery is unknown," and "a pile near the heavy machinery," the verbalization unit 214 may generate a sentence "On May 10, 2023, at 11:00, worker P is operating unknown heavy machinery near the center of the construction site A, in a surrounding area with soil and rocks. There is a pile near the heavy machinery."

The large language model unit 216 may use the large language model to learn the sentence "On May 10, 2023, at 10:00, worker R entered through the front gate of the construction site A, with unknown heavy machinery loaded on a trailer" and the sentence "On May 10, 2023, at 11:00, worker P is operating unknown heavy machinery near the center of the construction site A, in a surrounding area with soil and rocks. There is a pile near the heavy machinery."

The large language model unit 216 having learned a part of the revised process plan as the external input information, may, as the learning, estimate that the "unknown heavy machinery" refers to, for example, "heavy machinery related to the down-the-hole hammer method." Furthermore, the large language model unit 216 may, as the learning, estimate that each sentence generated by the verbalization unit 214 describes "pile driving work using the down-the-hole hammer method."

As described above, by learning the external input information, the large language model unit 216 is configured to appropriately learn the above sentences even when the sentence generated by the verbalization unit 214 includes ambiguous descriptions (e.g., "unknown heavy machinery").

Furthermore, in a case where the large language model unit 216 cannot estimate the "down-the-hole hammer method" from the aforementioned sentence describing the event of May 10, which is generated by the verbalization unit 214, the large language model unit 216 may perform the following operation.

For example, in a case where the target identified by the target identification unit 212 is "worker S," the target states acquired by the state acquisition unit 2131 are "date/time: May 15, 2023, at 10:00," "location: near the center of the construction site A," and "action: reinforcement," and the surrounding situations acquired by the surrounding situation acquisition unit 2132 are "a surrounding area with foundations," "reinforcing bars around the area," and "with a hooker in hand," the verbalization unit 214 may generate a sentence "On May 15, 2023, at 10:00, worker S is installing reinforcing bars with a hooker in hand, near the center of the construction site A, in a surrounding area with foundations."

For example, in a case where the target identified by the target identification unit 212 is "worker T," and the target states acquired by state acquisition unit 2131 are "date/time: May 15, 2023, at 11:00," "location: a central east side of the construction site A," and "action: cutting," and the surrounding situations acquired by the surrounding situation acquisition unit 2132 are "reinforcing bars around the area," and "tool: rebar cutter," the verbalization unit 214 may generate a sentence "On May 15, 2023, at 11:00, worker T is installing reinforcing bars using a rebar cutter on a central east side of the construction site A."

The large language model unit 216 may use the large language model to learn the sentence "On May 15, 2023, at 10:00, worker S is installing reinforcing bars with a hooker in hand, near the center of the construction site A, in a surrounding area with foundations" and the sentence "On May 15, 2023, at 11:00, worker T is installing reinforcing bars using a rebar cutter on a central east side of the construction site A."

The large language model unit 216 may, as the learning, estimate that each sentence generated by the verbalization unit 214 describes "reinforcement work in the foundation work process." The large language model unit 216 may also estimate, with reference to the process plan and the revised process plan, that the event of May 10 (i.e., the sentence regarding May 10 generated by the verbalization unit 214) is highly likely "pile driving work" using the "down-the-hole hammer method."

In the information processing apparatus 20, even if there is a change in a part of the process plan, there is no need to perform modification or relearning on at least one of the verbalization unit 214 and the large language model unit 216. Additionally, the large language model unit 216 is configured to recognize that there is a change in a part of the process plan, for example, by learning the revised process plan. Therefore, in the changed part of the process plan, even if an event described in the sentence generated by the verbalization unit 214 differs from the content of the original process plan, in a case where the event described in the sentence generated by the verbalization unit 214 is consistent, for example, with the content of the revised process plan, then, the large language model unit 216 is allowed to determine that there is no abnormality.

### <Fourth Example Embodiment>

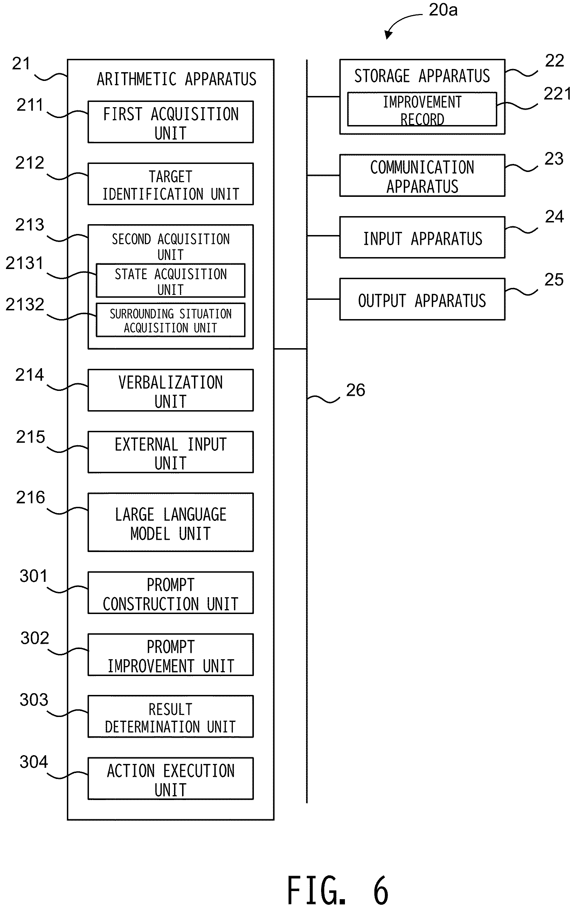

An information processing apparatus, an information processing method, and a recording medium according to a fourth example embodiment will be described with reference to FIG. 6. The following describes the information processing apparatus, the information processing method, and the recording medium according to the fourth example embodiment, by using an information processing apparatus 20a. In the fourth example embodiment, a part of a configuration of the information processing apparatus 20a differs from that of the information processing apparatus 20 described in the third example embodiment. The remaining parts may be the same as those described in the first to third example embodiments. Therefore, in the fourth example embodiment, a description that overlaps with that of the first to third example embodiments is omitted as appropriate.

### (Configuration of Information Processing Apparatus)

In FIG. 6, the arithmetic apparatus 21 may include the first acquisition unit 211, the target identification unit 212, the second acquisition unit 213, the verbalization unit 214, the external input unit 215, the large language model unit 216, a prompt construction unit 301, a prompt improvement unit 302, a result determination unit 303, and an action execution unit 304, as function blocks logically realized or as processing circuits physically realized. Note that the arithmetic apparatus 21 may not include the verbalization unit 214.

At least one of the first acquisition unit 211, the target identification unit 212, the second acquisition unit 213, the verbalization unit 214, the external input unit 215, the large language model unit 216, the prompt construction unit 301, the prompt improvement unit 302, the result determination unit 303, and the action execution unit 304 may be realized in a form in which logical function blocks and physical processing circuits (i.e., hardware) are mixed. In a case where at least a part of the first acquisition unit 211, the target identification unit 212, the second acquisition unit 213, the verbalization unit 214, the external input unit 215, the large language model unit 216, the prompt construction unit 301, the prompt improvement unit 302, the result determination unit 303, and the action execution unit 304 is a function block, the at least a part of the first acquisition unit 211, the target identification unit 212, the second acquisition unit 213, the verbalization unit 214, the external input unit 215, the large language model unit 216, the prompt construction unit 301, the prompt improvement unit 302, the result determination unit 303, and the action execution unit 304 may be realized by the arithmetic apparatus 21 executing a predetermined computer program.

### (Operation of Information Processing Apparatus)

The prompt construction unit 301 constructs (in other words, generates) a prompt from one target, the target state associated with the one target, and the surrounding situation associated with the one target. For example, the prompt construction unit 301 may determine at least one of a target to be analyzed and a matter to be analyzed, according to preset conditions. The prompt construction unit 301 may construct a prompt, according to a preset template(s) for prompts. As in the verbalization unit 214 described above, the prompt construction unit 301 may construct, as the prompt, a prompt (i.e., a sentence) conforming to the grammar of a natural language.

For example, the prompt construction unit 301 may construct, as the prompt, an interrogative sentence asking about a predetermined event. For instance, in a case where there are two possible states of the predetermined event, which are occurrence of the event and nonoccurrence of the event, the prompt construction unit 301 may construct, as the prompt, an interrogative sentence asking whether or not the predetermined event has occurred. For example, in a case where there are three or more possible states of the predetermined event, the prompt construction unit 301 may construct, as the prompt, an interrogative sentence asking, "Is X A, B, or C?"

The prompt improvement unit 301 improves the prompt constructed by the prompt construction unit 301 such that an appropriate answer can be obtained from the large language model unit 216, based on the characteristics of the large language model unit 216. In a case where the prompt improvement unit 301 improves the prompt constructed by the prompt construction unit 301, it may store the improvement content, for example, in the storage apparatus 22 (see an "improvement record 221" in FIG. 6). The improvement content may be, for example, the prompt constructed by the prompt construction unit or the prompt inputted by the user. Furthermore, for example, a plurality of prompts with high correlation among a plurality of prompts inputted to the large language model in a predetermined period may be extracted, and differences between the prompts may be stored as the improvement content. Both the prompts and the differences therebetween may also be stored. For example, suppose a prompt a1 is inputted to the large language model, followed by a prompt a2. In a case where the prompt a1 and the prompt a2 are highly correlated, i.e. in a case where prompts with the same content are inputted, it may be determined that improvements made to the prompt a1 are likely applied to the prompt a2. Therefore, a difference between the prompt a1 and the prompt a2 may be extracted to record how the improvements are made.

The prompt improvement unit 302 may improve the prompt constructed by the prompt construction unit 301 with reference to the improvement record 221 (i.e., a past improvement record). For example, the prompt improvement unit 302 may refer to the improvement record 221 using at least one of a verb and an object contained in the prompt constructed by the prompt construction unit 301 as a clue. In a case where the frequency of improvements made for at least one of the verb and the object used as a clue is higher than a predetermined value, the prompt improvement unit 302 may improve the prompt. In a case where the frequency of improvements made for at least one of the verb and the object used as a clue is lower than the predetermined value, the prompt improvement unit 302 may not improve the prompt. A case where the frequency of improvements is equal to the predetermined value, may be treated as one of the aforementioned cases.

The prompt improvement unit 302 may improve the prompt constructed by the prompt construction unit 301 with reference to the external input information acquired by the external input unit 215.

The prompt improvement unit 302 may input the improved prompt to the large language model unit 216. In a case where the prompt improvement unit 302 does not improve the prompt constructed by the prompt construction unit 301, the prompt improvement unit 302 may input the prompt constructed by the prompt construction unit 301 to the large language model unit 216.

As described above, the large language model unit 216 uses the large language model to learn both the sentence generated by the verbalization unit 214 (i.e., the sentence indicating the target state regarding the target) and the external input information acquired by the external input unit 215. In a case where the prompt (i.e., the prompt constructed by the prompt construction unit 301 or the prompt improved by the prompt improvement unit 302) is inputted from the prompt improvement unit 302, the large language model unit 216 uses the large language model to output an answer to the inputted prompt.

The result determination unit 303 acquires the answer outputted from large language model unit 216. The result determination unit 303 determines whether or not the acquired answer is a result (in other words, an answer) conforming to a request to the information processing apparatus 20a. For example, the result determination unit 303 may determine whether or not the syntax of the answer outputted from the large language model unit 216 conforms to a preset template(s) for answers. In this case, the "preset template for answers" corresponds to an example of the "request to the information processing apparatus 20a".

In a case where the answer outputted from the large language model unit 216 is determined not to conform to the request to the information processing apparatus 20a, the result determination unit 303 transmits difference information indicating a difference between the request to the information processing apparatus 20a and the answer (i.e., the result) outputted from the large language model unit 216, to the prompt improvement unit 302.

For example, in a case where the syntax of the answer outputted from the large language model unit 216 does not conform to any of the preset template(s) for answers, the result determination unit 303 may transmit, as the difference information, information indicating that the answer does not conform to the template(s) for answers, and information indicating template(s) for one or more answers, to the prompt improvement unit 302.

Upon receiving the difference information from the result determination unit 303, the prompt improvement unit 302 improves the prompt constructed by the prompt construction unit 301 so as to resolve the difference indicated by the difference information. For example, in a case where the difference is that the answer does not conform to the template(s) for answers, the prompt improvement unit 302 may add, to the prompt constructed by the prompt text construction unit 301, a sentence "Please write your answer using the following syntax" and the template(s) for one or more answers, thereby improving the prompt.

Subsequently, the prompt improvement unit 302 inputs the improved prompt to the large language model unit 216. The prompt improvement unit 302 transmits (or gives notice of) the improved prompt to the result determination unit 303. The prompt improvement unit 302 associates and stores the difference indicated by the difference information and a difference between the improved prompt and the original prompt (in other words, information indicating what improvement is made for what difference) in the storage apparatus 22 as the improvement record.

In a case where the answer outputted from the large language model unit 216 is determined to conform to the request to the information processing apparatus 20a, the result determination unit 303 determines whether or not a predetermined action needs to be performed, based on words contained in the outputted answer. In a case where it is determined that the predetermined action needs to be performed, the result determination unit 303 instructs the action execution unit 304 to perform the predetermined action. The action execution unit 304 performs the predetermined action instructed by the result determination unit 303.

Here, the predetermined action may vary depending on application scenarios of the information processing apparatus 20a. The predetermined action may include at least one of: notifying or warning one person as the target identified by the target identification unit 212; notifying or warning a preset person; and notifying or requesting a system external to the information processing apparatus 20a.

### (Application Example of Information Processing Apparatus)

For example, the operation of the information processing apparatus 20 in a case where the information processing apparatus 20a is applied to construction site process management will be specifically described.

It is assumed that there have been multiple incidents of construction materials or the like being stolen from a construction site at night and the information processing apparatus 20a is thus applied for nighttime security. It is assumed that a plurality of cameras are installed to capture images of a plurality of locations in the construction site. At least one of the plurality of cameras may be installed to capture images of an area near an entrance/exit of the construction site. The first acquisition unit 211 acquires moving images respectively captured by the plurality of cameras.

It is assumed that the external input unit 215 has acquired, for example, construction technical information, a process plan, and the like, as the external input information. The external input information may include a proper name specific to the construction site. The large language model unit 216 is assumed to have learned the external input information, using the method described in the third example embodiment or some other methods.

The prompt construction unit 301 is assumed to have a template registered in advance for a prompt "[person name] performed [action] at [time] at [construction site name]. Is this action suspicious?" The [person name] in the template may be replaced with the name or designation of a person as the target identified by the target identification unit 212. The [time], [construction site name], and [action] in the template may be replaced with the "time," "location," and "action" respectively included in the target state acquired by the target state acquisition unit 2131.

The result determination unit 303 includes a dictionary indicating trigger words that cause the action execution unit 304 to perform the predetermined action. This dictionary may include, for example, affirmative/positive words evoking crime such as "it is suspicious" and "there is a risk of suspicious activity," and negative words not evoking crime such as "there is no suspicious activity" or "no suspicious activity is found."

In a case where the answer outputted from the large language model unit 216 contains any of the aforementioned affirmative/positive words, the result determination unit 303 instructs the action execution unit 304 to perform a predetermined action of "notifying a security company." In a case where the answer outputted from the large language model unit 216 contains the aforementioned negative words, the result determination unit 303 instructs the action execution unit 304 to perform a predetermined action of "recording a video and notifying the on-site supervisor via email."

For example, in a case where the target identified by the target identification unit 212 is "worker S," the target states acquired by the state acquisition unit 2131 are "date/time: May 15, 2023, at 19:00," "location: front gate of the construction site A," and "action: entered on foot," and the surrounding situation acquired by the surrounding situation acquisition unit 2132 is "at dusk in a surrounding area," the prompt construction unit 302 may construct a prompt "On May 15, 2023, at 19:00, worker S entered on foot at the front gate of the construction site A, at dusk in a surrounding area. Is this action suspicious?"

It is assumed that the large language model unit 216 has learned the actions of each worker at the construction site A on May 15, 2023. In a case where the above prompt is inputted to the large language model unit 216, the large language model unit 216 may recognize, for example, that the worker S is a worker who performed reinforcement work with reference to the learned actions of each worker. As a result, the large language model unit 216 may estimate that the worker S is not a suspicious person. The large language model unit 216 may then output an answer such as, for example, "Although this is an entry outside working hours, there is no suspicious activity at this time."

The result determination unit 303 determines whether or not the answer outputted from the large language model unit 216 contains the words included in the dictionary. In the above case, the phrase/words "there is no suspicious activity" contained in the answer, corresponds to the negative words included in the dictionary. Therefore, the result determination unit 303 instructs the action execution unit 304 to perform "recording a video and notifying the on-site supervisor via email." As a result, the action execution unit 304 executes "recording a video and notifying the on-site supervisor via email."

Subsequently, the target identified by the target identification unit 212 is "worker S," and the target states acquired by the state acquisition unit 2131 are "date/time: May 15, 2023, at 19:10" and "location: front gate of the construction site A," and "action: left on foot," and the surrounding situations acquired by the surrounding situation acquisition unit 2132 are "at dusk in a surrounding area" and "with a bag in hand," the prompt construction unit 302 may construct a prompt "On May 15, 2023, at 19:10, worker S left on foot from the front gate of the construction site A, at dusk in a surrounding area. He had a bag in his hand. Is this action suspicious?"

In a case where the above prompt is inputted to the large language model unit 216, the large language model unit 216 may recognize that the worker S stayed at the construction site A for 10 minutes and left the construction site A with a bag in hand, for example, from a relation with the prompt "On May 15, 2023, at 19:00, worker S entered on foot at the front gate of the construction site A, at dusk in a surrounding area. Is this action suspicious?".

Here, the large language model unit 216 may have learned the past actions of each worker at the construction site A. The large language model unit 216 may recall that workers sometimes return at night to retrieve forgotten items. Furthermore, the large language model unit 216 may have learned details of incidents of construction materials or the like being stolen from the construction site. The large language model unit 216 may recall that items frequently stolen from the construction site by criminals include construction materials and heavy machinery. Therefore, the large language model unit 216 may estimate that the state of a bag being in the worker S's hand does not constitute theft. Consequently, the large language model unit 216 may output an answer such as, for example, "Although this is an entry/exit outside working hours, no suspicious activity is found."

The result determination unit 303 determines whether or not the answer output from the large language model unit 216 contains the words included in the dictionary. In the above case, the phrase "no suspicious activity is found" in the answer, corresponds to the negative words in the dictionary. Therefore, the result determination unit 303 instructs the action execution unit 304 to perform "recording a video and notifying the on-site supervisor via email." As a result, the action execution unit 304 performs "recording a video and notifying the on-site supervisor via email."

For example, in a case where the target identified by the target identification unit 212 is "unknown," and the target states acquired by the state acquisition unit 2131 are "date/time: May 15, 2023, at 20:00," "location: front gate of the construction site A," and "action: entered by truck," and the surrounding situation acquired by the surrounding situation acquisition unit 2132 is "at dusk in a surrounding area," the prompt construction unit 302 may construct a prompt "On May 15, 2023, at 20:00, an unknown individual entered by truck at the front gate of the construction site A, at dusk in a surrounding area. Is this activity suspicious?"

In a case where the above prompt is inputted to the large language model unit 216, the large language model unit 216 may recognize that the accuracy of person recognition is insufficient due to the situation in which it is at dusk. The large language model unit 216 may estimate that there is a risk of suspicious activity, as an unknown individual entered the construction site outside working hours. Consequently, the large language model unit 216 may output an answer such as, for example, "It's at dusk, so visibility is poor, but it appears that an unknown individual has entered outside working hours, indicating that there is a risk of suspicious activity."

The result determination unit 303 determines whether or not the answer outputted from the large language model unit 216 contains the words included in the dictionary. In the above case, the phrase/words "there is a risk of suspicious activity" contained in the answer, corresponds to the affirmative/positive words included in the dictionary. Therefore, the result determination unit 303 instructs the action execution unit 304 to perform "notifying a security company." As a result, the action execution unit 304 performs "notifying a security company."

Subsequently, the target identified by the target identification unit 212 is "unknown", and the target states acquired by the state acquisition unit 2131 are "date/time: May 15, 2023, at 20:30" "location: front gate of the construction site A," and "action: left by truck," and the surrounding situations acquired by the surrounding situation acquisition unit 2132 is "at dusk in a surrounding area" and "with construction materials on a truck bed," the prompt construction unit 302 constructs a prompt "On May 15, 2023, at 20:30, an unknown individual left by truck from the front gate of the construction site A, at dusk in a surrounding area. The truck is loaded with construction materials on the truck bed. Is this activity suspicious?"

The large language model unit 216 may have learned the details of incidents of construction materials or the like being stolen from the construction site. The large language model unit 216 may recall that items frequently stolen from the construction site by criminals include construction materials and heavy machinery. Therefore, the large language model unit 216 may estimate that the state of construction materials being loaded on the truck bed carries a high risk of theft. As a result, the large language model unit 216 may output an answer such as, for example, "it appears that an unknown individual has taken away construction materials outside working hours, indicating that there is a risk of theft."

The result determination unit 303 determines whether or not the answer outputted from the large language model unit 216 contains the words included in the dictionary. In the above case, the phrase/words "there is a risk of theft" contained in the answer, corresponds to the affirmative/positive words included in the dictionary. Therefore, the result determination unit 303 instructs the action execution unit 304 to perform "notifying a security company." As a result, the action execution unit 304 performs "notifying a security company."

As described above, the large language model unit 216 learns the context of the actions of each worker and theft at the construction site. Therefore, based on this learning content, it is possible to estimate the presence or absence of suspicious activity.

Specifically, in a case where the large language model unit 216 outputs the response "it appears that an unknown individual has taken away construction materials outside working hours, indicating that there is a risk of theft", in response to the prompt "On May 15, 2023, at 20:30, an unknown individual left by truck from the front gate of the construction site A, at dusk in a surrounding area. The truck is loaded with construction materials on the truck bed. Is this activity suspicious?", and in a case where the dictionary of the result determination unit 303 contains "it is suspicious" and "there is no suspicious activity", but does not contain the phrase "there is a risk of theft", then, the result determination unit 303 may determine that the answer outputted from the large language model unit 216 is not the result conforming to the request to the information processing apparatus 20a.

The result determination unit 303 may transmit difference information indicating that the answer does not contain the phrase/words "it is suspicious" and "there is no suspicious activity," to the prompt improvement unit 302. The prompt improvement unit 302 may then improve the prompt "On May 15, 2023, at 20:30, an unknown individual left by truck from the front gate of the construction site A, at dusk in a surrounding area. The truck is loaded with construction materials on the truck bed. Is this activity suspicious?", for example, to "On May 15, 2023, at 20:30, an unknown individual left by truck from the front gate of the construction site A, at dusk in a surrounding area. The truck is loaded with construction materials on the truck bed. Is this activity suspicious? Please answer using the words below: "it is suspicious," and "there is no suspicious activity."

### (Technical Effect)

For example, the information processing apparatus 20a applied to construction site process management may learn information necessary for process management, such as construction technical information and a process plan, as well as the actions of each worker at the construction site. As described above, in a case where a prompt related to security, such as "Is this activity suspicious?" is inputted to the large language model unit 216, the large language model unit 216 in the third example embodiment may output an answer to the security-related prompt with reference to the learned information necessary for process management. That is, according to the information processing apparatus 20a, it is possible to change its intended use without performing modification or relearning of the large language model unit 216. In other words, the information processing apparatus 20a is allowed to serve a different purpose from its original intended purpose, without performing modification or relearning of the large language model unit 216.

Especially in the information processing apparatus 20a, the prompt construction apparatus 301 automatically constructs a prompt, for example, based on the outputs from the target identification apparatus 212 and the second acquisition apparatus 213 (in other words, based on events occurring in the real world). That is, the information processing apparatus 20a eliminates the need for a user (i.e., a human) to assess the situation and give instructions. Automatic prompt construction is hardly possible with traditional mathematical models.

Furthermore, through the cooperation of the prompt improvement unit 302 and the result determination unit 303, the prompt may be automatically improved such that the answer conforming to the request to the information processing apparatus 20a is outputted from the large language model unit 216. In addition, through the cooperation of the result determination unit 303 and the action execution unit 304, an appropriate action may be automatically taken, in response to the answer outputted from the large language model unit 216.

### <Supplementary Notes>

With respect to the example embodiments described above, the following Supplementary Notes are further disclosed.

### (Supplementary Note 1)

An information processing apparatus including:
a first acquisition unit that acquires a moving image;
a target identification unit that identifies a target from the moving image;
a second acquisition unit that acquires a target state representing a state of the target;
a verbalization unit that generates a sentence indicating the target state regarding the target, from the target and the target state; and
a learning unit that enables a large language model to learn the sentence generated by the verbalization unit.

### (Supplementary Note 2)

The information processing apparatus according to Supplementary Note 1, wherein
the second acquisition unit includes:
   a state acquisition unit that acquires the target state from the moving image; and
   a surrounding situation acquisition unit that acquires a surrounding situation of the target from the moving image, and
the verbalization unit generates a sentence indicating the target state regarding the target, based on the target, the target state, and the surrounding situation.

### (Supplementary Note 3)

The information processing apparatus according to Supplementary Note 1 or 2, wherein a sentence indicating the target state regarding the target, is a sentence conforming to grammar of one natural language.

### (Supplementary Note 4)

The information processing apparatus according to any one of Supplementary Notes 1 to 3, further including:
a prompt construction unit that generates a prompt for at least one of prediction and estimation regarding the target, based on the target and the target state; and
an output unit that outputs a result of inputting the prompt to the large language model.

### (Supplementary Note 5)

The information processing apparatus according to Supplementary Note 4, further including:
a determination unit that determines whether an output result outputted from the large language model in response to the prompt being inputted to the large language model, is a result conforming to a request; and
a prompt improvement unit that improves the prompt in response to a determination that the output result is not the result conforming to the request.

### (Supplementary Note 6)

The information processing apparatus according to Supplementary Note 4 or 5, further including:
a determination unit that determines whether or not to perform a predetermined action, based on an output result outputted from the large language model in response to the prompt being inputted to the large language model; and
an execution unit that performs the predetermined action in response to a determination that the predetermined action is to be performed.

### (Supplementary Note 7)

The information processing apparatus according to any one of Supplementary Notes 1 to 6, wherein the target identification unit identifies a person as the target, through biometric authentication using the moving image.

### (Supplementary Note 8)

The information processing apparatus according to any one of Supplementary Notes 1 to 7, wherein the target identification unit identifies the target by performing image recognition processing on the moving image.

### (Supplementary Note 9)

An information processing method including:
acquiring a moving image;
identifying a target from the moving image;
acquiring a target state representing a state of the target;
generating a sentence indicating the target state regarding the target, from the target and the target state; and
enabling a large language model to learn the sentence generated by the verbalization unit.

### (Supplementary Note 10)

A recording medium on which a computer program that allows a computer to execute an information processing method is recorded, the information processing method including:
acquiring a moving image;
identifying a target from the moving image;
acquiring a target state representing a state of the target;
generating a sentence indicating the target state regarding the target, from the target and the target state; and
enabling a large language model to learn the sentence generated by the verbalization unit.

The present disclosure is permitted to be changed, if desired, without departing from the essence or spirit of this disclosure which can be read from the claims and the entire specification. An information processing apparatuses, an information processing method, and a recording medium with such changes are also intended to be within the technical scope of the present disclosure.

### Description of Reference Codes

10, 10a, 20, 20a Information processing apparatus
11, 211 First acquisition unit
12, 212 Target identification unit
13, 213 Second acquisition unit
14, 214 Verbalization unit
131, 2131 State acquisition unit
132, 2132 Surrounding situation acquisition unit
215 External input unit
216 Large language model unit
217 Answer display unit
301 Prompt construction unit
302 Prompt improvement unit
303 Result determination unit
304 Action execution unit

## Claims

1. An information processing apparatus comprising:
a first acquisition unit that acquires a moving image;
a target identification unit that identifies a target from the moving image;
a second acquisition unit that acquires a target state representing a state of the target;
a verbalization unit that generates a sentence indicating the target state regarding the target, from the target and the target state; and
a learning unit that enables a large language model to learn the sentence generated by the verbalization unit.

2. The information processing apparatus according to claim 1, wherein
the second acquisition unit includes:
a state acquisition unit that acquires the target state from the moving image; and
a surrounding situation acquisition unit that acquires a surrounding situation of the target from the moving image, and
the verbalization unit generates a sentence indicating the target state regarding the target, based on the target, the target state, and the surrounding situation.

3. The information processing apparatus according to claim 1 or 2, wherein a sentence indicating the target state regarding the target, is a sentence conforming to grammar of one natural language.

4. The information processing apparatus according to any one of claims 1 to 3, further comprising:
a prompt construction unit that generates a prompt for at least one of prediction and estimation regarding the target, based on the target and the target state; and
an output unit that outputs a result of inputting the prompt to the large language model.

5. The information processing apparatus according to claim 4, further comprising:
a determination unit that determines whether an output result outputted from the large language model in response to the prompt being inputted to the large language model, is a result conforming to a request; and
a prompt improvement unit that improves the prompt in response to a determination that the output result is not the result conforming to the request.

6. The information processing apparatus according to claim 4 or 5, further comprising:
a determination unit that determines whether or not to perform a predetermined action, based on an output result outputted from the large language model in response to the prompt being inputted to the large language model; and
an execution unit that performs the predetermined action in response to a determination that the predetermined action is to be performed.

7. The information processing apparatus according to any one of claims 1 to 6, wherein the target identification unit identifies a person as the target, through biometric authentication using the moving image.

8. The information processing apparatus according to any one of claims 1 to 7, wherein the target identification unit identifies the target by performing image recognition processing on the moving image.

9. An information processing method comprising:
acquiring a moving image;
identifying a target from the moving image;
acquiring a target state representing a state of the target;
generating a sentence indicating the target state regarding the target, from the target and the target state; and
enabling a large language model to learn the sentence generated.

10. A recording medium on which a computer program that allows a computer to execute an information processing method is recorded, the information processing method including:
acquiring a moving image;
identifying a target from the moving image;
acquiring a target state representing a state of the target;
generating a sentence indicating the target state regarding the target, from the target and the target state; and
enabling a large language model to learn the sentence.
